# FASCICULE DE BREVET EUROPEEN

(11) **EP 3 738 061 B1**
(45) Date de publication et mention de la délivrance du brevet: **24.06.2026**
(21) Numéro de dépôt: 19701785.8
(22) Date de dépôt: 11.01.2019
(51) Int. Cl.: G06F 21/31, G06Q 20/34, G06Q 20/36, G06F 21/32, G06F 21/43, G06F 21/62, G06Q 20/32, G06F 21/42, G06Q 20/40

(54) **PROCÉDÉ DE DÉTERMINATION D'UNE ASSOCIATION ENTRE UNE CARTE BANCAIRE ET UN TERMINAL DE COMMUNICATION, DISPOSITIF, SYSTÈME ET PROGRAMME CORRESPONDANT**
VERFAHREN ZUM FESTSTELLEN EINER ZUORDNUNG ZWISCHEN EINER BANKKARTE UND EINEM KOMMUNIKATIONSTERMINAL, ENTSPRECHENDES GERÄT, SYSTEM UND PROGRAMM
METHOD OF DETERMINING AN ASSOCIATION BETWEEN A BANK CARD AND A COMMUNICATION TERMINAL, CORRESPONDING APPARATUS, SYSTEM AND PROGRAM

(30) Priorité: 12.01.2018 FR 1850278
(43) Date de publication de la demande: 18.11.2020
(73) Titulaire: Banks and Acquirers International Holding, 75015 Paris (FR)
(72) Inventeur: QUENTIN, Pierre, 95880 ENGHIEN LES BAINS (FR); BEUNARDEAU, Marc, 75015 PARIS (FR); JABBERI, Slim, TUNIS 1002 (TN); ROUX, Vincent, 78210 SAINT-CYR-L'ECOLE (FR)
(74) Mandataire: Germain Maureau
(86) Numéro de dépôt international: PCT/EP2019/050715
(87) Numéro de publication internationale: WO 2019/138086

(56) Documents cités:
- WO-A1-2005/073934
- WO-A1-2010/043722
- FR-A1- 2 940 567

## Description

### 1. Domaine

L'invention se rapporte au domaine du paiement. Plus particulièrement, l'invention se rapporte à la mise en œuvre de transaction de paiement au sein d'un espace de vente physique (magasin indépendant, centre commercial, super marché). L'invention se rapporte plus particulièrement à l'augmentation de la sécurité des transactions de paiement menées au sein de ces établissements.

### 2. Art antérieur

La décennie qui vient de s'écouler a indéniablement été marquée par l'avènement du terminal de communication intelligent, également appelé smartphone, qui a complètement bouleversé les comportements des utilisateurs dans de très nombreux domaines de la vie quotidienne. En 2017, près de deux milliard de terminaux de paiement ont été vendu dans le monde. Parmi les changements opérés, on peut notamment citer les modalités de paiement de biens et de services, notamment en magasin.

En effet, il est désormais possible, grâce à ces terminaux de communication, de réaliser des paiements sans utiliser de carte bancaire. Pour ce faire, cependant, le terminal de communication en question doit, dans la plupart des cas, disposer d'une interface de communication spécifique, appelée interface sans contact, principalement de type NFC (de l'anglais pour « Near Field Communication »). En utilisant cette interface de communication pour effectuer un paiement, le terminal de l'utilisateur est approché du terminal de paiement et un échange de données en NFC est alors mis en œuvre. Au cours de cet échange, le terminal de communication de l'utilisateur se comporte comme une carte bancaire et transmet des données au terminal de paiement. Plus particulièrement, au cours de cet échange le terminal de communication transmet un numéro de carte bancaire, une date de validité, un nom de porteur (ou des données dérivées de ces données de base).

Le terminal de paiement reçoit ces données et traite la transaction de paiement (souvent en relation avec un ou plusieurs serveurs de paiement, ou serveurs transactionnels), pour effectuer le débit du montant des achats sur le compte bancaire de l'utilisateur.

Cette manière de procéder à un paiement (ou d'autres variantes impliquant la transmission de données par le terminal de communication de l'utilisateur) ont été décrites dans la littérature et sont actuellement mises en œuvre par certains terminaux de communication et certains terminaux de paiement. Or, la problématique se situe justement au niveau de l'adoption de ce type de techniques de paiement. En effet, pour pouvoir mettre en œuvre ce type de techniques de paiement, il est nécessaire de disposer de plusieurs prérequis.

Un premier prérequis se situe au niveau technique, du côté du terminal de communication : il est généralement nécessaire (voire indispensable) que ce dernier embarque un module d'émission/transmission de données NFC. Or ce type de module n'équipe qu'une portion somme toute assez réduite de terminaux de paiement. En effet, de nombreux fabricant de terminaux sélectionnent assez strictement les modèles de terminaux qui embarquent un tel module de transmission. Par exemple, les modèles de terminaux les moins chers sont généralement dépourvus d'une interface NFC, rendant de facto ce modèle de terminal impropre à l'usage de paiement sans contact dans un magasin.

Un deuxième prérequis, qui se situe également au niveau du terminal de communication se rapporte à la sécurisation des données de carte bancaire. En effet, lors de la mise en œuvre du paiement, les données de carte bancaires (ou des données résultant de celles-ci) sont transmises au terminal de paiement. Les données sont généralement extraites du terminal de communication, qui doit donc sauvegarder ces données en permanence et assurer la sécurité de celles-ci. Pour ce faire, le terminal de communication doit disposer d'un environnement d'exécution sécurisé (TEE, de l'anglais pour *« Trusted Execution Environment »*) et/ou d'un composant spécifique de sécurisation (SE, de l'anglais pour « Secure Element »). Or, à nouveau, ce type de technologie est bien souvent réservé à des terminaux de communication haut de gamme et donc à des terminaux qui se situent en dehors de la portée (financière) de la plupart des utilisateurs.

Un troisième prérequis, de moins grande importance, tient en la nécessité, pour l'utilisateur, de disposer d'une connexion de données active sur son terminal de communication : la mise en œuvre d'une transaction de paiement par l'intermédiaire d'un terminal de communication nécessite en effet souvent que le terminal puisse valider cette transaction auprès d'un ou plusieurs serveurs, ce qui implique que le terminal puisse procéder à un échange de données avec ce ou ces serveurs. Or de telles connexions de données peuvent être onéreuses et ne sont pas nécessairement souscrites par les utilisateurs. Cette connexion peut être fournie par le commerçant (cas des grands centres commerciaux par exemple), mais cela n'est pas systématique.

De facto, ces prérequis limitent la croissance du paiement par terminal de communication dans les locaux des commerçants. La limitation de cette croissance est problématique pour deux raisons principales : la première tient en la rapidité du paiement lorsqu'il est réalisé à l'aide d'un terminal mobile (cette rapidité est synonyme de fluidité pour le commerçant et donc de satisfaction de la clientèle) ; la deuxième est la sécurisation générale de la transaction de paiement : comme l'utilisateur n'utilise pas sa carte bancaire et que le terminal stocke (de manière sécurisée) le données de cette carte, le risque de vol des données de carte à l'occasion d'achats chez des commerçants est grandement réduit, limitant de facto les conséquences de ces vols.

Il existe donc un besoin de fournir une méthode de paiement, chez les commerçants, qui fasse intervenir le terminal de communication de l'utilisateur tout en prévenant les problématiques soulevées par l'utilisation d'interfaces de communications spécifiques.

### 3. Résumé

La présente technique a été développée en conservant les problématiques précédemment évoquées à l'esprit. Plus particulièrement, la présente technique permet d'effectuer des paiements par l'intermédiaire du terminal mobile de l'utilisateur tout en éliminant les prérequis technologiques précédemment mentionnés, tout en améliorant la sécurité des transactions de paiement réalisées chez les commerçants.

Plus particulièrement, il est décrit un procédé de détermination d'une association entre un identifiant de carte bancaire et au moins un identifiant de terminal de communication mobile, procédé mis en œuvre par un dispositif électronique, procédé caractérisé en ce qu'il comprend :
- une étape d'obtention d'un identifiant d'une carte bancaire courante, carte bancaire utilisée pour effectuer un achat de bien ou de service à l'aide d'un terminal de paiement, ladite étape d'obtention étant mise en œuvre au moment de la réalisation d'une transaction de paiement réalisée à l'aide de ladite carte bancaire ;
- au moins une étape d'obtention d'une donnée représentative d'au moins un identifiant de terminal de communication ;
- une étape de calcul d'un score de correspondance entre ledit identifiant de carte bancaire et ladite au moins une donnée représentative d'un identifiant de terminal de communication.

Ainsi, l'invention permet, progressivement (ou non en fonction des modes de réalisation), d'obtenir des données qui déterminent des scores de correspondances entre des identifiants de téléphone portable ou autres terminaux de communication à disposition des utilisateurs (lesquels transitent dans des boutiques de commerçants) avec des identifiants de cartes bancaires (cartes de paiement, cartes de débit, cartes de crédit). Une fois les score de correspondances obtenus (et « stabilisés ») la sécurité des transactions bancaires menées par les commerçants peut être grandement améliorée.

Selon une caractéristique particulière, l'étape d'obtention d'une donnée représentative d'au moins un identifiant de terminal de communication est concomitante au moment de la réalisation de la transaction de paiement réalisée à l'aide de ladite carte bancaire.

Selon un mode de réalisation particulier, l'étape d'obtention d'une donnée représentative d'au moins un identifiant de terminal de communication comprend :
- une étape d'émission d'une requête d'inquisition à destination d'une pluralité de dispositifs de communication, par l'intermédiaire d'une interface de communication sans fil ;
- une étape de réception d'au moins une réponse correspondant à la requête d'inquisition, en provenance d'au moins un dispositif de communication répondant à ladite requête, ladite réponse comprenant un identifiant de terminal de communication.

Selon une caractéristique particulière, ladite au moins une réponse comprend en outre une puissance de signal.

Selon une caractéristique particulière, l'étape d'obtention d'une donnée représentative d'au moins un identifiant de terminal de communication comprend en outre une étape d'anonymisation dudit identifiant de terminal de communication, délivrant ladite donnée représentative de l'identifiant de terminal de communication.

Selon un mode de réalisation particulier, l'étape de calcul du score de correspondance comprend une étape de mise à jour d'un état de correspondance dans lequel sont comptabilisées des occurrences de données représentatives d'identifiants de terminaux de communication.

Selon une caractéristique particulière, l'étape de calcul du score de correspondance comprend, pour une donnée représentative d'un identifiant de terminal de communication, dit identifiant de terminal courant :
- une étape de recherche, au sein d'une structure de données, d'un enregistrement correspondant à l'identifiant de terminal courant, dit enregistrement courant ; et
- lorsque ledit identifiant courant est trouvé dans la structure de données, une étape de mise à jour dudit enregistrement, comprenant :
- l'incrémentation d'un nombre total de transactions au cours duquel ledit identifiant courant a été obtenu ;
- l'ajout ou la modification d'un sous enregistrement correspondant à un nombre total de transactions au cours duquel ledit identifiant de terminal courant a été obtenu pour ledit identifiant de carte bancaire courant.
- une étape de mise à jour du score de correspondance de l'identifiant de carte bancaire courant avec l'identifiant de terminal courant par le calcul du ratio AB/AC.

Selon un mode de réalisation particulier, l'ajout ou la modification d'un sous enregistrement correspondant à un nombre total de transactions comprend en outre une puissance de réception d'une réponse à une requête d'inquisition, requête transmise par l'intermédiaire d'une interface de communication sans fil.

Ainsi, cette technique peut être mise en œuvre à l'aide d'équipements déjà présents chez les commerçants et ne nécessite pas d'adaptation particulière de leur part.

La présente technique se rapporte également à un dispositif électronique de détermination d'une association entre un identifiant de carte bancaire et au moins un identifiant de terminal de communication mobile, caractérisé en ce qu'il comprend :
- des moyens d'obtention d'un identifiant d'une carte bancaire courante, carte bancaire utilisée pour effectuer un achat de bien ou de service à l'aide d'un terminal de paiement, ces moyens étant mise en œuvre au moment de la réalisation d'une transaction de paiement réalisée à l'aide de ladite carte bancaire ;
- des moyens d'obtention d'au moins ne donnée représentative d'au moins un identifiant de terminal de communication ;
- des moyens de calcul d'un score de correspondance entre ledit identifiant de carte bancaire et ladite au moins une donnée représentative d'un identifiant de terminal de communication.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus ainsi que les différentes caractéristiques qui les constituent, sont combinables entre eux pour la mise en œuvre de la technique proposée.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente les différentes étapes de traitement de la présente technique ;
- La figure 2 présente un système dans lequel la technique peut être mise en œuvre ;
- La figure 3 décrit un dispositif électronique de mise en œuvre, selon un mode de réalisation simplifié.

### 5. Description

### 5.1. Rappels du principe

Comme explicité précédemment, le principe général de la technique décrite consiste à déterminer des scores de correspondance entre des données de carte bancaires, utilisées lors de transactions de paiement, et des identifiants de terminaux de communication, présents lors de ces transactions. Dans la suite et ce qui précède, il est fait référence à la carte bancaire comme moyen de paiement. Il est bien évident que tout autre moyen de paiement adéquat peut faire l'objet de la présente demande, à commencer par le terminal de communication de l'utilisateur, lorsqu'il est utilisé comme moyen de paiement.

Les scores de correspondance permettent de déterminer, avec un taux de confiance suffisant, qu'une carte bancaire donnée correspond à un terminal de communication donné. A l'aide de cette association unique, il est donc possible, au sein d'un commerce (ou d'un espace de vente plus globalisé) de déterminer qu'un utilisateur (en possession du terminal dont l'identifiant a été reconnu) est également l'utilisateur en possession de la carte bancaire (dont l'identifiant a également été reconnu). En termes de technique de paiement, l'établissement de cette identité d'utilisateur pour ces deux informations permet de mettre en œuvre une nouvelle méthode de paiement utilisant un terminal de communication, méthode qui ne nécessite ni d'utiliser le terminal de communication, ni la carte bancaire de l'utilisateur.

Cette méthode de paiement est brièvement décrite par la suite.

En premier lieu, cependant, la technique porte sur l'établissement de scores de correspondance d'association entre les identifiants de cartes bancaires et les identifiants de terminaux de communications.

Selon la présente, ces deux ensembles de données sont collectés au niveau d'un commerce ou d'un espace de vente, principalement (mais non exclusivement) lors de la réalisation de paiement à l'aide de cartes bancaire (ou d'autres moyens de paiement équivalents). L'association en elle-même est réalisée au fil de l'eau, c'est-à-dire au fur et à mesure des transactions réalisées. Ainsi, à quelques exceptions près, l'association carte bancaire/terminal de communication n'est pas immédiate, mais elle est plutôt progressive, en fonction des paiements réalisés (elle peut être réalisée sur plusieurs jours, semaines ou mois, en fonction essentiellement de la fréquence avec laquelle l'utilisateur effectue un paiement avec sa carte bancaire dans un commerce ou un espace de vente plus globalisé).

Le principal problème de l'association réside dans l'élimination des identifiants de terminaux parasites, à commencer par les identifiants des employés du commerce (ou du commerçant lui-même s'il est le seul vendeur) et les identifiants de terminaux de communications d'autres utilisateurs présents, mais ne participant pas à la transaction. C'est pourquoi, d'une manière générale, la détermination de l'association est mise en œuvre en utilisant des listes d'identifiants de terminaux de communication présents lors de la mise en œuvre de la transaction et des listes de terminaux de communications présents (indépendamment de leur participation à la mise en œuvre d'une transaction) au cours d'une période temporelle prédéfinie, par exemple une journée (une semaine, un mois, une année).

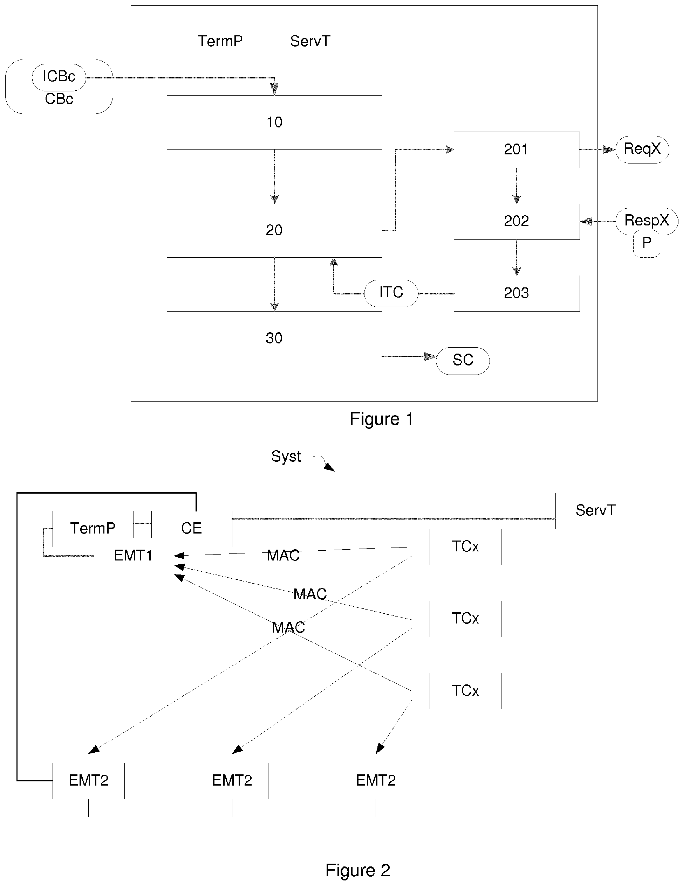

Plus particulièrement, en relation avec la figure 1, il est décrit un procédé de détermination d'une association entre un identifiant de carte bancaire et au moins un identifiant de terminal de communication mobile, procédé mis en œuvre par un dispositif électronique (par exemple un terminal de paiement TermP, et/ou un serveur transactionnel ServT), le procédé comprend :
- une étape d'obtention (10) d'un identifiant d'une carte bancaire courante (ICBC), carte bancaire (CBc) utilisée pour effectuer un achat de bien ou de service à l'aide d'un terminal de paiement (TermP), cette étape d'obtention(10) étant mise en œuvre au moment de la réalisation d'une transaction de paiement réalisée à l'aide de la carte bancaire (CBc) ;
- au moins une étape d'obtention (20) d'une donnée représentative d'au moins un identifiant de terminal de communication (ITC) ; cette étape peut être mise en œuvre en continu ou ponctuellement ; dans une variante, l'étape d'obtention (20) est concomitante au moment de la réalisation de la transaction de paiement réalisée à l'aide de la carte bancaire ;
- une étape de calcul (30) d'un score de correspondance (SC) entre le identifiant de carte bancaire (ICBC) et les données représentatives d'un identifiant de terminal de communication (ITC).

En fonction des conditions opérationnelles, l'étape d'obtention (20) de la donnée représentative d'au moins un identifiant de terminal de communication (ITC) comprend :
- une étape d'émission (201) d'une requête d'inquisition (ReqX) à destination d'une pluralité de dispositifs de communication, par l'intermédiaire d'une interface de communication sans fil (il s'agit de l'ensemble des dispositifs potentiellement dans la zone qui sont visés par une requête de type broadcast) ;
- une étape de réception (202) d'au moins une réponse (RespX) correspondant à la requête d'inquisition, en provenance d'au moins un dispositif de communication répondant à la requête, la réponse comprenant un identifiant de terminal de communication ; la réponse (RespX) peut également comprendre en outre une puissance de signal (P) ; lorsque la puissance du signal de réponse se situe en deça d'un seuil prédéterminé, cette réponse (et l'identifiant qui l'accompagne) peut ne pas être prise en compte.
- une étape d'anonymisation (203) du identifiant de terminal de communication, délivrant la donnée représentative de l'identifiant de terminal de communication (ITC) : cette anonymisation peut être réalisée par une technique de hachage.

Les interfaces de communication utilisées sont prioritairement celles correspondant aux standards WiFi et/ou bluetooth. Pour plus de sécurité, les deux technologies (WiFi, Bluetooth) peuvent être utilisées pour fournir ainsi deux identifiants différents, représentatifs d'un même terminal de communication et associé à une seule et même carte bancaire.

A partir des données récoltées on construit pour chaque identifiant de carte bancaire, une liste des identifiants de terminal mobile associés et les scores de correspondance correspondants. D'une manière générale, plus le score de correspondance est élevé, plus il est plausible que l'identifiant de terminal mobile et l'identifiant de carte bancaire soient associés et donc qu'ils soient représentatifs d'une même personne physique. Lorsque ce score de correspondance est suffisant (c'est-à-dire qu'il excède un seuil prédéterminé, fixé par exemple entre 85 et 95 %), il est alors possible d'entamer la mise en œuvre d'une procédure de paiement dématérialisée, c'est-à-dire qu'elle ne nécessite ni l'utilisation de la carte bancaire, ni potentiellement l'utilisation du terminal de communication de l'utilisateur.

Pour ce faire, la procédure initiale comprend, lorsque le score de correspondance est suffisant :
- une étape de transmission, par exemple au commerçant (pris au sens large), l'une information représentative d'une correspondance entre un identifiant de carte bancaire et un identifiant de terminal de communication :
   - cette transmission est réalisée par exemple au moment où l'utilisateur possédant sa la carte bancaire et le terminal de communication est chez le commerçant et qu'il réalise une transaction, comme usuellement, avec sa carte bancaire ;
   - le commerçant est averti que le score de correspondance d'association de ces deux données est représentatif d'une identité de personne ;
- le commerçant indique alors à l'utilisateur qu'il peut opter pour un paiement dématérialisé s'il le souhaite et entamer une procédure d'inscription en ce sens (opt-in) ; la procédure ne nécessite pas la communication des données de la carte bancaire, car elles sont déjà en possession du terminal de paiement pour la réalisation de la transaction en cours ; seules des données complémentaires sont saisies (par exemple nom, prénom, une photo peut également être obtenue par le commerçant).
   - dans un autre mode de réalisation, une application spécifique peut être téléchargée par l'utilisateur sur son terminal de communication pour effectuer la saisie de ces données et ce avant même la mise en œuvre de la technique de score de correspondance, sans que le commerçant n'en ait connaissance ; cette application peut également servir à autoriser un paiement qui serait initié par le commerçant ; l'objectif de cette application est en quelque sorte de préparer la possibilité d'effectuer un paiement dématérialisée par la suite ;
   - quel que soit le mode de réalisation, les données et plus particulièrement les données de carte bancaire sont confiées à un serveur transactionnel qui enregistre et associé l'identité de l'utilisateur, éventuellement confirmée par la saisie de données relatives à l'identité (photo de carte d'identité et/ou de passeport) à un identifiant de terminal de communication.

Suite à cet enregistrement, au sein du serveur transactionnel, la méthode de paiement dématérialisée mise en œuvre est la suivante :
Un utilisateur (associé et enregistré) pénètre dans un espace de vente et souhaite effectuer un achat. Une module spécifique de la caisse enregistreuses et/ou du terminal de paiement, obtient un identifiant de terminal de communication (par les mêmes mécanismes que ceux utilisés pour réaliser l'association moyens de paiement/terminal de communication), donnée qu'il compare (ou fait comparer) avec les identifiants enregistrés et associés et obtient une réponse (positive ou négative). En cas de réponse positive, le terminal de paiement et/ou la caisse enregistreuse obtient les données d'identité de l'utilisateur : le commerçant est alors à même de comparer ces données avec des données qui sont présentées par l'utilisateur (idéalement, cette comparaison peut être limitée à une comparaison visuelle, du visage de l'utilisateur avec le visage enregistré - photo d'identité et être automatique (sans intervention du commerçant)). Lorsque l'identité de l'utilisateur est confirmée, le commerçant confirme la validation de la transaction, sur la base des données obtenues (et notamment des données de carte bancaires) et ce sans que l'utilisateur ait eu la nécessité d'effectuer une action avec sa carte bancaire ou son terminal de communication. En fonction des modes de réalisation et des systèmes d'implémentation, les données d'identité, obtenues par le terminal de paiement et/ou la caisse enregistreuse sont transmises à partir d'un serveur transactionnel qui stocke ces données de manière sécurisée.

En fonction des modes de réalisation, une opération de validation du paiement peut être mise en œuvre par l'utilisateur, notamment en acceptant la transaction à partir de son terminal de communication. Dans ce cas de figure, on perd un peu de fluidité par rapport à la situation préalablement décrite, mais en contrepartie, l'utilisateur est rassuré et conserve la main sur les paiements. L'application utilisée pour valider ce paiement est alors la même que celle qui est utilisée par l'utilisateur pour saisir et enregistrer les données d'identité le concernant. Une opération de validation du paiement peut être mise en œuvre par l'utilisateur en fournissant une information biométrique de validation du paiement : un terminal de paiement (ou une caisse enregistreuse) disposant d'une interface d'obtention de données biométrique de l'utilisateur (empreinte digitale, iris, face id), peut, pour valider le paiement, obtenir les données biométriques acquises, transmettre ces données (ou une représentation de celles-ci) au serveur transactionnel ; le serveur transactionnel obtient ces données, de la part du terminal de paiement (ou de la caisse) ; puis il récupère, à partir du PAN ou du MAC (dans une base de données idoine), des données biométriques de référence et compare ces données de référence aux données reçues. Lorsque la comparaison est positive, la transaction est validée par le serveur transactionnel.

Cette manière de faire permet d'éviter les comportements frauduleux de commerçant qui souhaiteraient passer des transactions dès qu'un utilisateur enregistré se présenterait dans l'espace de vente ou dans le commerce.

Plus particulièrement, dans un mode de réalisation préférentiel, un module de reconnaissance facial, installé au sein du terminal de paiement ou de la caisse enregistreuse est en charge de l'obtention d'une représentation du visage de l'utilisateur au moment de la réalisation de la transaction. Ce module de reconnaissance faciale est sécurisé et connecté au processeur de sécurité du terminal de paiement (pour assurer la sécurité de la reconnaissance). Il scanne le visage de l'utilisateur *au moment* de la transaction, c'est-à-dire lors de l'achat. Ce module est autonome : il ne peut pas être mis en œuvre manuellement par le commerçant et est automatiquement activé en cas de paiement par la méthode décrite ci-dessus. Les données acquises (données du visage) sont transmises directement au serveur transactionnel en même temps que les autres données de la transaction sans que le commerçant ne puisse intervenir.

En tout état de cause, grâce à la technique de calcul du score de correspondance décrit dans la présente, il est possible de mettre en œuvre un paiement de manière beaucoup plus simple et fluide qu'avec les méthodes connues et ce même pour les utilisateurs qui ne disposent pas de terminaux de communication très onéreux. Ainsi, grâce à la technique décrite, il est possible de populariser le paiement à l'aide d'un terminal de communication tout en conservant les attributs de sécurité des paiements réalisés par l'intermédiaire d'une carte bancaire.

On décrit, par la suite, un mode de réalisation de la technique de calcul de score de correspondance selon la présente, permettant l'association carte bancaire/terminal de communication et permettant in fine le paiement tel que décrit précédemment.

### 5.2. Description d'un mode de réalisation

On décrit, dans ce mode de réalisation, l'implémentation de la méthode précédente à un cas de figure particulier. Dans ce cas particulier, l'identifiant de carte bancaire est constitué d'un PAN (de l'anglais pour *« Primary account number »*) ou d'un dérivé de PAN (par exemple un PAN haché). L'intérêt de transformer le PAN est de permettre une plus grande confidentialité de l'information traitée. Dans ce cas particulier, l'identifiant de terminal de communication est constitué d'un MAC Bluetooth (ou d'un dérivé de MAC (par exemple un MAC haché). L'intérêt de transformer le MAC est également de permettre une plus grande confidentialité de l'information traitée.

On appelle état [E] une liste de (Pᵢ,Lᵢ), où Pᵢ est un PAN correspondant à une transaction, Lᵢ une liste de MAC associés à cette transaction (il s'agit donc d'une structure de données pouvant prendre la forme d'une base de données locale ou distante). La liste Lᵢ est constituée uniquement des MAC obtenus lors de la transaction (c'est-à-dire les PAN obtenus avec un intervalle temporel situé autour de la transaction). La méthode d'obtention des PAN est brièvement décrite par la suite. L'état [E] est construit naturellement en ajoutant à un état courant [E₋₁] un couple (Pᵢ,Lᵢ) représentatif du moment où une transaction est effectuée (avec le PAN Pᵢ, en ajoutant (Pᵢ,Lᵢ) à l'état courant [E₋₁]). Lᵢ est la liste de MAC présents lorsque la transaction est faite. L'adjonction du couple (Pᵢ,Lᵢ) peut être réalisée au fil de l'eau, tout au long de la réalisation des transactions, ou bien au contraire dans un traitement par lot (« batch ») effectué postérieurement à la mise en œuvre des transactions, par exemple en fin de journée ou en fin de période d'exploitation. En fonction des modes de réalisation, cet état peut être mutualisé (c'est-à-dire réalisé par un serveur, regroupant plusieurs surfaces de ventes ou plusieurs magasins, répartis géographiquement à des localisations différentes) ou bien être réalisé localement, pour une seule surface de vente ou un seul magasin, l'avantage résultant d'une mutualisation étant une facilité de calcul, comme cela est explicité par la suite.

Comme indiqué dans le rappel du principe, à partir d'un état [E] on construit pour chaque PAN, la liste des MAC associés et les scores de correspondance. Dans ce mode de réalisation, plus le score de correspondance est élevé, plus il est plausible que le MAC et le PAN soient associés et donc qu'ils soient représentatifs d'une même personne physique. Dans ce mode de réalisation, le score est compris entre 0 et 1, 1 étant la valeur maximale du score, 0 la valeur minimale.

Soit AB représentant le nombre de couples (P,L) de l'état courant [E] pour lequel une adresse MAC donnée M appartient à la liste L; ce nombre AB peut être vu comme le nombre de fois où ce MAC M a été vu dans le commerce lorsqu'une transaction est réalisée avec le PAN P ;

Soit AC le nombre de liste L de l'état [E] dans lequel M appartient à L ; ce nombre AC peut être vu comme le nombre de fois où ce MAC M a été vu dans le magasin lorsqu'une transaction est réalisée, indépendamment du PAN utilisé pour ces transaction.

L'état [E] peut alors être constitué, par exemple, de la façon suivante :

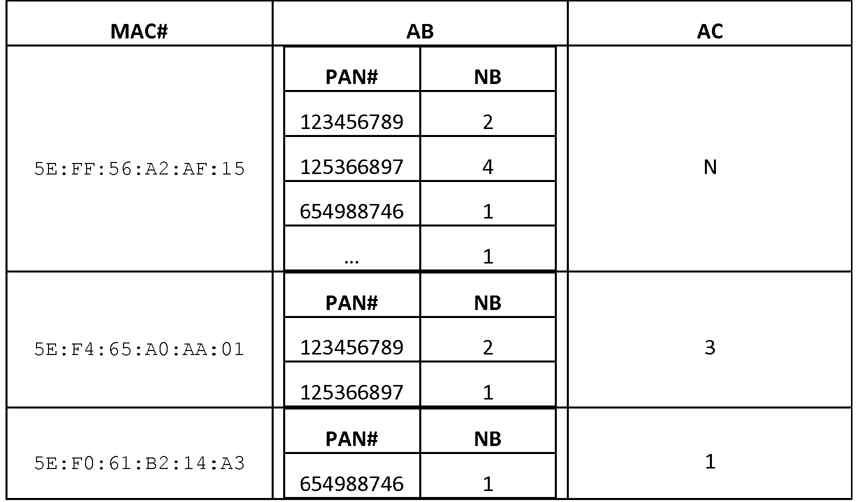

Dans cet exemple, on constate que le premier MAC de la liste apparaît pour tous les PAN (c'est-à-dire que la somme des NB associé à chaque PAN est proche (voire égal)) du nombre N total de fois où ce MAC apparaît. AU contraire, le deuxième MAC de la liste n'apparaît que dans trois transactions : deux fois avec le premier PAN (123456789) et une seule fois avec le deuxième PAN (125366897). Le troisième MAC de la liste n'apparaît que dans une seule transaction.

Ainsi, le score de correspondance Sc_{[P}, _{M]} représentatif de l'association du PAN P avec le MAC M, dans ce mode de réalisation, est égal à : AB divisé par AC.

Pour le troisième exemple (5E:F0:61:B2:14:A3), ce score de correspondance vaut 1. Pour le deuxième exemple (5E:F4: 65:A0:AA: 01), le score de correspondance vaut 2/3 pour le PAN 123456789 et 1/3 pour le PAN 125366897. Pour le premier exemple (5E:FF:56:A2:AF:15) la valeur du score de correspondance est résiduelle.

En fonction des modes de réalisation, on va considérer que la correspondance est correcte à partir d'un seuil de correspondance. Idéalement, le seuil de correspondance est égal à 1. Cependant, le seuil de correspondance peut être abaissé en fonction des mises en œuvre opérationnelles. Grace à cette méthode de calcul, on réduit la complexité de détermination de l'association MAC/PAN : en effet, plus le score de correspondance n'est élevé, plus la probabilité d'association entre les deux identifiants MAC/PAN est forte. AU contraire, plus le score de correspondance est faible, plus cette probabilité est faible. Typiquement, un score de correspondance faible correspond à un identifiant de terminal qui se trouve fréquemment (ou souvent) dans les transactions. Il s'agit donc probablement d'un équipement du commerçant (terminal de communication du commerçant, d'un employé ou autre équipement permanent de la surface de vente). A l'inverse, un identifiant de terminal de communication qui apparaît peu (idéalement une unique fois) est plus susceptible d'être associé à un seul et même identifiant de carte bancaire, comme c'est le cas pour le dernier exemple précédent. Ainsi, on résout simplement les problèmes posés par les équipements récurrents qui viennent perturber le processus d'association.

Parmi les caractéristiques additionnelles à considérer, selon certaines variantes de réalisation, les sous enregistrements AB peuvent également comprendre la puissance de réception de la réponse à une requête d'inquisition, pour obtenir les adresses MAC des terminaux de communication. Ainsi, en plus du nombre, la puissance de réception du signal peut être prise en compte pour déterminer les scores. Plus particulièrement, dans les cas ou de très nombreux dispositifs de communication sont présents dans la surface de vente, cette puissance de réception de la réponse à la requête d'inquisition permet d'éliminer un nombre important de dispositifs de communication répondant à cette requête : il s'agit d'éliminer, en premier lieu, les dispositifs dont la puissance de réception est trop faible. Ceci est particulièrement utile dans le cadre des surfaces de vente comprenant de nombreux point de paiement (caisses enregistreuses, terminaux de paiement) et comprenant un grand nombre d'utilisateurs (dont beaucoup peuvent régler des achats de manière simultanée), tels que les supermarchés.

### 5.3. Système de mise en œuvre

On présente, en relation avec la figure 2, un système (Syst) adapté à la mise en œuvre de la présente technique. Un tel système comprend, dans cet exemple, un terminal de paiement (TermP), connecté ou intégré à une caisse enregistreuse (CE). Ce terminal de paiement (termP) et/ou la caisse enregistreuse (en cas d'intégration) est, outre les fonctionnalités habituelles, en charge de l'obtention des données de carte bancaire des utilisateurs. A chaque fois qu'une carte bancaire est utilisée pour effectuer un paiement, le terminal de paiement enregistre les données de la carte bancaire ou un identifiant représentatif de ces données (également appelé « token »), comme cela a été décrit précédemment (par exemple un PAN haché). Le système comprend en outre des moyens d'obtention de données d'identification de terminaux de communication (TCx). Typiquement, ces moyens peuvent se présenter sous plusieurs formes. Deux décrites par la suite.

Dans une première forme, les moyens d'obtention (EMT) de données d'identification de terminaux de communication sont intégrés (EMT1) au sein du terminal de paiement et/ou de la caisse enregistreuse. Il s'agit d'interfaces de communication de type interface bluetooth et/ou interface wifi. L'une, l'autre ou les deux interfaces sont utilisées pour obtenir une donnée d'identification de type adresse MAC, comme décrit précédemment. Ces adresses MAC sont par exemple rendues anonymes (hachées) afin de créer un identifiant unique de l'adresse.

Dans une deuxième forme, les moyens d'obtention de données d'identification (EMT2,...) de terminaux de communication sont dispersés au sein de la surface de vente ou du magasin et font partie d'un ensemble de capteurs destinés à suivre et/ou localiser les utilisateurs.

Deux modes d'obtention des adresses MAC sont envisageables (et combinables en fonction des modes de réalisation). Le premier mode consiste en une obtention dite contextuelle, c'est-à-dire une obtention des adresses MAC au moment du paiement, à l'aide d'une carte bancaire. Dans ce mode contextuel, le moment de l'obtention est donc plus ou moins synchronisé avec le moment de l'obtention des données de carte bancaire pour effectuer le paiement. Il s'agit d'un mode d'obtention avantageux car il permet de limiter la captation des identifiants (adresses) de terminaux à un moment et un endroit précis. Plus particulièrement, le ou les modules de communication implémentant les interfaces de communication wifi et/ou bluetooth ne captent dès lors que les adresses MAC des dispositifs se trouvant à proximité du terminal de paiement ou de la caisse enregistreuse : en effet, le terminal de paiement ou la caisse enregistreuse sont en mesure d'obtenir la puissance du signal émis par le terminal de communication, puissance qui est en adéquation avec la distance de ce terminal de communication par rapport au terminal de paiement (ou à la caisse enregistreuse). Dès lors, un paramètre de puissance peut être utilisé pour exclure les terminaux de communication dont la puissance de signal est trop faible et ainsi limiter les possibilités d'association entre des adresses de terminal de communication et des données de carte bancaire. L'avantage de ce mode d'obtention contextuel peut également être obtenu dans un système dans lequel des capteurs sont externes à la caisse enregistreuse ou au terminal de paiement. Il suffit pour mettre en œuvre ce mode contextuel, de définir un capteur de référence qui sera en charge de relever les adresses MAC des terminaux plus ou moins au moment du paiement par carte bancaire et d'utiliser les données obtenues (éventuellement filtrées par un paramètre de puissance dépendant de la distance du capteur de référence par rapport au terminal de paiement avec lequel la carte de paiement est utilisée). Un autre avantage du mode contextuel, lorsqu'il est mis en œuvre avec un terminal de paiement, réside dans le fait que la technique d'association carte/terminal de communication peut être mise en œuvre sans nécessiter d'adjonction supplémentaire de matériels (souvent couteux) : il suffit d'utiliser les interfaces de communication existantes présentes sur le terminal de paiement et/ou présentes sur la caisse enregistreuse.

Le deuxième mode consiste en une obtention dite continue, c'est-à-dire une obtention des adresses MAC tout au long de la période d'ouverture du magasin. Dans ce mode continu, les identifiants de terminal mobile sont donc captés horodatés et enregistrés en permanence. Ce mode de captation présente l'avantage de la complétude : il est possible de disposer de beaucoup plus de données de terminaux mobiles, tout en permettant un éventuel suivi et une éventuelle localisation des utilisateurs dans le magasin (par exemple dans un système dans lequel des capteurs sont externes et répartis dans le magasin ou la surface de vente. Dans ce mode de réalisation, il est ainsi possible de suivre et interpréter les déplacements de l'utilisateur au sein de la surface de vente tout en mettant en œuvre le procédé de l'invention pour permettre une association entre le terminal mobile de cet utilisateur et la carte bancaire ayant servi pour effectuer les achats. Dans ce mode continu, les données utilisables par le commerçant sont donc plus nombreuses que dans le mode contextuel. En revanche, cela nécessite de disposer d'un système comprenant plus de matériels et de modules de captations (Wifi, Bluetooth) que dans le mode d'obtention contextuel.

Dans le mode continu, par ailleurs, les identifiants obtenus sont horodatés pour être par la suite associés à des identifiants de cartes bancaires en fonction de l'heure de la transaction, ce qui permet d'être plus efficace et pertinent dans le calcul des scores de correspondances entre ces données. Ainsi, la structure de données présentée précédemment peut en outre contenir une heure associée à l'identifiant de carte bancaire, cette heure étant représentative de l'heure de la transaction ou de l'heure de capture des données d'identification du termina de communication.

Le système comprend également des moyens de traitement pour implémenter la méthode précédemment décrite. Ces moyens de traitement sont soit locaux (TemP, CE, Serveur local) ou distants (ServT). Lorsqu'ils sont localisés au sein de la surface de vente (donc locaux), les moyens de traitement gèrent les données propres à la surface de vente et permettent de déterminer les associations carte/terminal de communication en fonction des utilisateurs de cette surface de vente uniquement.

Avantageusement, les moyens de traitement sont distants (ServT) et ils mettent en œuvre la méthode précédemment décrites de manière globale. Plus particulièrement, les moyens de traitements sont situés au niveau d'un serveur (ou d'un groupe de serveurs) transactionnel, qui reçoit, de la part des terminaux de paiement (et/ou des caisses enregistreuses) les données de transaction bancaires devant être mises en œuvre. En d'autres termes, lorsque les moyens de traitement sont distants, la mise en œuvre de la méthode de calcul de score de correspondance précédemment décrite peut être réalisée en tenant compte d'une quantité plus importante de situation de captation. Dès lors, le calcul de scores de correspondance est plus efficace que dans le cas d'une unique surface de vente. Ainsi, par exemple, si une première transaction est réalisée avec une carte bancaire et que cette première transaction est associée à X identifiants de terminaux de communication et qu'une deuxième transaction est réalisées, dans un autre espace de vente et/ou dans une période temporelle différente (à plusieurs minutes, heures ou jours d'intervalle), et que cette deuxième transaction est associée à Y identifiants, il est dès lors beaucoup plus efficace de réaliser premier filtrage (avant même de calculer une score de correspondance de correspondance) entre les X et les Y identifiants précédemment obtenus pour ces deux transactions différentes. Idéalement, cette étape de filtrage permettra d'obtenir la solution, sans avoir besoin de réaliser le calcul d'un score de correspondance. A tout le moins, cette étape de filtrage permet de limiter les possibilités pour le calcul ultérieur du score de correspondance entre l'identifiant de carte bancaire et l'identifiant de terminal de communication.

Des moyens de traitement distants n'impliquent pas nécessairement que l'état [E] soit complètement distant. Par exemple, dans un mode de réalisation spécifique, l'état est transmis en fin de période d'activité du commerce (fin de journée par exemple) et traité à distance par le serveur transactionnel. Le traitement distant permet d'éliminer les faux positifs ou les faux négatifs et de fournir un état actualisé à la surface de vente ou au commerce, en réponse, état actualisé dans lequel seul les associations correctes PAN/MAC sont conservées, et état dans lequel on a limité les données aux seules données effectivement captées par la surface de vente : en d'autre termes l'état actualisé ne comprend pas de données PAN/MAC additionnelles par rapport à celles obtenus par la surface de vente elle-même.

### 5.4. Autres caractéristiques et avantages

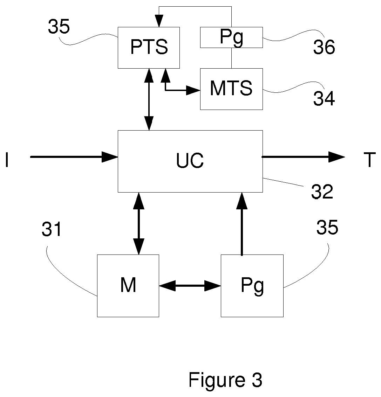

On décrit, en relation avec la figure 3, un terminal de paiement (TP) mis en œuvre pour gérer, l'association entre un terminal de communication d'un utilisateur et un moyen de paiement (telle une carte bancaire), selon le procédé décrit préalablement.

Par exemple, le terminal de paiement (TP) comprend une mémoire 31 comprenant par exemple une mémoire tampon, un processeur de traitement général 32, équipée par exemple d'un microprocesseur, et pilotée par un programme d'ordinateur 33, et/ou une mémoire sécurisée 34, un processeur de traitement sécurisé 35, pilotée par un programme d'ordinateur 36, ces unités de traitement mettant en œuvre des procédés de traitement de données tels que décrits précédemment pour effectuer des traitements d'association de moyens de paiement avec des terminaux de communication.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins une donnée représentative d'un paiement. Le processeur de traitement sécurisé 35 met en œuvre les étapes du procédé de précédemment décrit, selon les instructions du programme d'ordinateur 36 pour obtenir une donnée d'identification de carte bancaire et des données d'identification de terminal de communication avant la finalisation de la transaction de paiement.

Pour cela, le terminal de paiement (TP) comprend, outre la mémoire 34, des moyens de communications, tels que des modules de communication réseau, des moyens de transmission de données et des circuits de transmission de données entre les divers composants du terminal.

Les moyens précédemment décrits peuvent se présenter sous la forme d'un processeur particulier implémenté au sein d'un dispositif spécifique implanté au sein du terminal de paiement (TP). Selon un mode de réalisation particulier, le terminal de paiement (TP) met en œuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Procédé de détermination d'une association entre un identifiant de carte bancaire et au moins un identifiant de terminal de communication mobile, procédé mis en œuvre par un dispositif électronique (TermP, ServT), procédé **caractérisé en ce qu'**il comprend :
- une étape d'obtention (10) d'un identifiant d'une carte bancaire courante (ICBC), carte bancaire (CBc) utilisée pour effectuer un achat de bien ou de service à l'aide d'un terminal de paiement (TermP), ladite étape d'obtention (10) étant mise en œuvre au moment de la réalisation d'une transaction de paiement réalisée à l'aide de ladite carte bancaire (CBc) ;
- au moins une étape d'obtention (20) d'une donnée représentative d'au moins un identifiant de terminal de communication (ITC) ; comprenant
- une étape d'émission (201) d'une requête d'inquisition (ReqX) à destination d'une pluralité de dispositifs de communication, par l'intermédiaire d'une interface de communication sans fil ;
- une étape de réception (202) d'au moins une réponse (RespX) correspondant à la requête d'inquisition, en provenance d'au moins un dispositif de communication répondant à ladite requête, ladite réponse comprenant un identifiant de terminal de communication ;
- une étape de calcul (30) d'un score de correspondance (SC) entre ledit identifiant de carte bancaire (ICBC) et ladite au moins une donnée représentative d'un identifiant de terminal de communication (ITC) ;
- lorsque le score de correspondance excède un seuil prédeterminé, une étape de transmission d'une information représentative d'une correspondance entre ledit identifiant de carte bancaire et ladite au moins une donnée représentative d'un identifiant de terminal de communication.

2. Procédé selon la revendication 1, **caractérisé en ce que** l'étape d'obtention (20) d'une donnée représentative d'au moins un identifiant de terminal de communication (ITC) est concomitante au moment de la réalisation de la transaction de paiement réalisée à l'aide de ladite carte bancaire.

3. Procédé selon la revendication 1, **caractérisé en ce que** ladite au moins une réponse (RespX) comprend en outre une puissance de signal (P).

4. Procédé selon la revendication 1, **caractérisé en ce que** l'étape d'obtention (20) d'une donnée représentative d'au moins un identifiant de terminal de communication (ITC) comprend en outre une étape d'anonymisation (203) dudit identifiant de terminal de communication, délivrant ladite donnée représentative de l'identifiant de terminal de communication (ITC).

5. Procédé selon la revendication 1, **caractérisé en ce que** l'étape de calcul du score de correspondance comprend une étape de mise à jour d'un état de correspondance dans lequel sont comptabilisées des occurrences de données représentatives d'identifiants de terminaux de communication.

6. Procédé selon la revendication 1, **caractérisé en ce que** l'étape de calcul du score de correspondance comprend, pour une donnée représentative d'un identifiant de terminal de communication, dit identifiant de terminal courant :
- une étape de recherche, au sein d'une structure de données ([E]), d'un enregistrement correspondant à l'identifiant de terminal courant, dit enregistrement courant ; et lorsque ledit identifiant courant est trouvé dans la structure de données ([E]), une étape de mise à jour dudit enregistrement, comprenant :
- l'incrémentation d'un nombre total (AC) de transactions au cours duquel ledit identifiant courant a été obtenu ;
- l'ajout ou la modification d'un sous enregistrement correspondant à un nombre total (AB) de transactions au cours duquel ledit identifiant de terminal courant a été obtenu pour ledit identifiant de carte bancaire courant.
- une étape de mise à jour du score de correspondance de l'identifiant de carte bancaire courant avec l'identifiant de terminal courant par le calcul du ratio AB/AC.

7. Procédé selon la revendication 6, **caractérisé en ce que** l'ajout ou la modification d'un sous enregistrement correspondant à un nombre total (AB) de transactions comprend en outre une puissance de réception d'une réponse à une requête d'inquisition, requête transmise par l'intermédiaire d'une interface de communication sans fil.

8. Dispositif électronique (TermP, ServT) de détermination d'une association entre un identifiant de carte bancaire et au moins un identifiant de terminal de communication mobile, **caractérisé en ce qu'**il comprend :
- des moyens d'obtention (10) d'un identifiant d'une carte bancaire courante (ICBC), carte bancaire (CBc) utilisée pour effectuer un achat de bien ou de service à l'aide d'un terminal de paiement (TermP), ladite étape d'obtention(IO) étant mise en œuvre au moment de la réalisation d'une transaction de paiement réalisée à l'aide de ladite carte bancaire (CBc) ;
- des moyens d'obtention (20) d'au moins une donnée représentative d'au moins un identifiant de terminal de communication (ITC) ; configurés pour mettre en oeuvre
- une étape d'émission (201) d'une requête d'inquisition (ReqX) à destination d'une pluralité de dispositifs de communication, par l'intermédiaire d'une interface de communication sans fil ;
- une étape de réception (202) d'au moins une réponse (RespX) correspondant à la requête d'inquisition, en provenance d'au moins un dispositif de communication répondant à ladite requête, ladite réponse comprenant un identifiant de terminal de communication ;
- des moyens de calcul (30) d'un score de correspondance (SC) entre ledit identifiant de carte bancaire (ICBC) et ladite au moins une donnée représentative d'un identifiant de terminal de communication (ITC) :
- des moyens de transmission, lorsque le score de correspondance excède un seuil prédeterminé, d'une information représentative d'une correspondance entre ledit identifiant de carte bancaire et ladite au moins une donnée représentative d'un identifiant de terminal de communication.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1, lorsqu'il est exécuté sur un ordinateur.

## Patentansprüche

1. Verfahren zum Bestimmen einer Zuordnung zwischen einer Bankkarten-Kennung und mindestens einer Kennung eines mobilen Kommunikationsendgeräts, wobei das Verfahren von einer elektronischen Vorrichtung (TermP, ServT) bereitgestellt wird, wobei das Verfahren **dadurch gekennzeichnet ist, dass** es umfasst:
- einen Schritt zum Erhalten (10) einer Kennung einer gängigen Bankkarte (ICBC), Bankkarte (CBc), die zum Kauf von Waren oder Dienstleistungen mithilfe eines Zahlungsterminals (TermP) verwendet wird, wobei der Schritt des Erhaltens (10) zum Zeitpunkt der Durchführung einer mithilfe der Bankkarte (CBc) durchgeführten Zahlungstransaktion bereitgestellt wird;
- mindestens einen Schritt zum Erhalten (20) eines repräsentativen Datenelements von mindestens einer Kommunikationsendgerät-Kennung (ITC); umfassend
- eines Schritts zum Senden (201) einer Inquisitionsanfrage (ReqX) an eine Vielzahl von Kommunikationsvorrichtungen über eine drahtlose Kommunikationsschnittstelle;
- eines Schritts zum Empfangen (202) mindestens einer Antwort (RespX), die der Inquisitionsanfrage entspricht, von mindestens einer Kommunikationsvorrichtung, die auf die Anfrage antwortet, wobei die Antwort eine Kommunikationsendgerät-Kennung umfasst;
- einen Schritt zum Berechnen (30) eines Übereinstimmungsscores (SC) zwischen der Bankkarten-Kennung (ICBC) und dem mindestens einen für eine Kommunikationsendgerät-Kennung (ITC) repräsentativen Datenelements;
- wenn der Übereinstimmungswert einen vorbestimmten Schwellenwert überschreitet, einen Schritt zum Übermitteln einer Information, repräsentativ für eine Übereinstimmung zwischen der Bankkarten-Kennung und dem mindestens einen Datenelement, repräsentativ für eine Kommunikationsendgerät-Kennung.

2. Verfahren nach Anspruch 1, **dadurch gekennzeichnet, dass** der Schritt zum Erhalten (20) eines repräsentativen Datenelements mindestens einer Kommunikationsendgerät-Kennung (ITC) gleichzeitig mit der Durchführung der mithilfe der Bankkarte durchgeführten Zahlungstransaktion erfolgt.

3. Verfahren nach Anspruch 1, **dadurch gekennzeichnet, dass** die mindestens eine Antwort (RespX) ferner eine Signalstärke (P) umfasst.

4. Verfahren nach Anspruch 1, **dadurch gekennzeichnet, dass** der Schritt zum Erhalten (20) eines repräsentativen Datenelements von mindestens einer Kommunikationsendgerät-Kennung (ITC) ferner einen Schritt zum Anonymisieren (203) der Kommunikationsendgerät-Kennung umfasst, der das repräsentative Datenelement der Kommunikationsendgerät-Kennung (ITC) liefert.

5. Verfahren nach Anspruch 1, **dadurch gekennzeichnet, dass** der Schritt zum Berechnen des Übereinstimmungsscores einen Schritt zum Aktualisieren eines Übereinstimmungsstatus umfasst, in dem Vorkommen von Daten gezählt werden, die repräsentativ für Kommunikationsendgerät-Kennungen sind.

6. Verfahren nach Anspruch 1, **dadurch gekennzeichnet, dass** der Schritt zum Berechnen des Übereinstimmungsscores für ein repräsentatives Datenelement einer Kommunikationsendgerät-Kennung, der sogenannten aktuellen Endgerät-Kennung, umfasst:
- einen Schritt zum Suchen eines Datensatzes innerhalb einer Datenstruktur ([E]), der der aktuellen Endgerät-Kennung entspricht (als aktueller Datensatz bezeichnet); und, wenn die aktuelle Kennung in der Datenstruktur ([E]) gefunden wird, einen Schritt zum Aktualisieren des Datensatzes, der umfasst:
- Inkrementieren einer Gesamtzahl (AC) von Transaktionen, während der die aktuelle Kennung erhalten wurde;
- Hinzufügen oder Ändern eines Untersatzes, der einer Gesamtzahl (AB) von Transaktionen entspricht, während der die aktuelle Endgerät-Kennung für die aktuelle Bankkarten-Kennung erhalten wurde.
- einen Schritt zum Aktualisieren des Übereinstimmungsscores der aktuellen Bankkarten-Kennung mit der aktuellen Terminal-Kennung durch Berechnung des AB/AC-Verhältnisses.

7. Verfahren nach Anspruch 6, **dadurch gekennzeichnet, dass** das Hinzufügen oder Ändern eines Untersatzes, der einer Gesamtzahl (AB) von Transaktionen entspricht, ferner den Empfang einer Antwort auf eine Inquisitionsanfrage umfasst, wobei die Anfrage über eine drahtlose Kommunikationsschnittstelle übermittelt wird.

8. Elektronische Vorrichtung (TermP, ServT) zur Bestimmung einer Zuordnung zwischen einer Bankkarten-Kennung und mindestens einer Kennung eines mobilen Kommunikationsendgeräts, **dadurch gekennzeichnet, dass** sie umfasst:
- Mittel zum Erhalten (10) einer Kennung einer gängigen Bankkarte (ICBC), einer Bankkarte (CBc), die zum Kauf von Waren oder Dienstleistungen mithilfe eines Zahlungsterminals (TermP) verwendet wird, wobei der Schritt zum Erhalten (10) zum Zeitpunkt der Durchführung einer mithilfe der Bankkarte (CBc) durchgeführten Zahlungstransaktion bereitgestellt wird;
- Mittel zum Erhalten (20) mindestens eines repräsentativen Datenelements mindestens einer Kommunikationsendgerät-Kennung (ITC); die konfiguriert sind zum Bereitstellen
- eines Schritts zum Senden (201) einer Inquisitionsanfrage (ReqX) an eine Vielzahl von Kommunikationsvorrichtungen über eine drahtlose Kommunikationsschnittstelle;
- eines Schritts zum Empfangen (202) mindestens einer Antwort (RespX), die der Inquisitionsanfrage entspricht, von mindestens einer Kommunikationsvorrichtung, die auf die Anfrage antwortet, wobei die Antwort eine Kommunikationsendgerät-Kennung umfasst;
- von Mitteln zum Berechnen (30) eines Übereinstimmungsscores (SC) zwischen der Bankkarten-Kennung (ICBC) und dem mindestens einen für eine Kommunikationsendgerät-Kennung (ITC) repräsentativen Datenelement:
- von Mitteln zum Übermitteln, wenn der Übereinstimmungswert einen vorbestimmten Schwellenwert überschreitet, einer Information, repräsentativ für eine Übereinstimmung zwischen der Bankkarten-Kennung und dem mindestens einen Datenelement, repräsentativ für eine Kommunikationsendgerät-Kennung.

9. Computerprogrammprodukt, das aus einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen zum Ausführen eines Verarbeitungsverfahrens gemäß Anspruch 1 umfasst, wenn es auf einem Computer ausgeführt wird.

## Claims

1. Method for determining an association between a bankcard identifier and at least one mobile communications terminal identifier, a method implemented by an electronic device (TermP, ServT), method **characterized in that** it comprises:
- a step for obtaining (10) an identifier (ICBC) of a current bankcard, a bankcard (CBc) used to make a purchase of an article or a service by means of a payment terminal (TermP), said step for obtaining (10) being implemented at the time of the execution of a payment transaction made by means of said bankcard (CBc);
- at least one step for obtaining (20) a piece of data representative of at least one communications terminal identifier (ITC); comprising
- a step for sending (201) an inquiry request (ReqX) addressed to a plurality of communications devices, by means of a wireless communications interface;
- a step for receiving (202) at least one response (RespX) corresponding to the inquiry request, coming from at least one communications device corresponding to said request, said response comprising a communications terminal identifier;
- a step for computing (30) a score of correspondence (SC) between said bankcard identifier (ICBC) and said at least one piece of data representative of a communications terminal identifier (ITC);
- when the score of correspondence surpasses a predetermined threshold, a step for transmitting a piece of information representing a correspondence between said bankcard identifier and said at least one piece of data representative of a communications terminal identifier.

2. The method according to claim 1, **characterized in that** the step for obtaining (20) a piece of data representative of at least one communications terminal identifier (ITC) is concomitant with the time of execution of the payment transaction made by means of said bankcard.

3. The method according to claim 3, **characterized in** said at least one response (RespX) furthermore comprises a signal power value (P).

4. The method according to claim 3, **characterized in that** the step for obtaining (20) a piece of data representative of at least one communications terminal identifier (ITC) furthermore comprises a step for anonymizing (203) said communications terminal identifier, delivering said piece of data representative of the communications terminal identifier (ITC).

5. The method according to claim 1, **characterized in that** the step for computing the score of correspondence comprises a step for updating a state of correspondence in which occurrences of data representative of communications terminal identifiers are counted.

6. The method according to claim 1, **characterized in that** the step for computing the score of correspondence comprises, for a piece of data representative of a communications terminal identifier called a current terminal identifier:
- a step of searching, within a data structure ([E]), for a record corresponding to the current terminal identifier, called a current record; and
- when said current identifier is found in the data structure ([E]), a step of updating said record, comprising:
- the incrementing of a total number (AC) of transactions during which said current identifier has been obtained;
- the addition or the modification of a sub-record corresponding to a total number (AB) of transactions during which said current terminal identifier has been obtained for said current bankcard identifier.
- a step of updating the score of correspondence of the current bankcard identifier with the current terminal identifier by computing the ratio AB/AC.

7. The method according to claim 7, **characterized in that** the addition or the modification of a sub-record corresponding to a total number (AB) of transactions furthermore comprises a power value of reception of a response to an inquiry request, the request being transmitted by means of a wireless communications interface.

8. Electronic device (TermP, ServT) for determining an association between a bankcard identifier and at least one mobile communications terminal identifier, **characterized in that** it comprises:
- means for obtaining (10) an identifier (ICBC) of a current bankcard, a bankcard (CBc) used to purchase an item or a service by means of a payment terminal (TermP), said obtaining (10) being implemented at the time of the execution of a payment transaction made by means of said bankcard (CBc);
- means for obtaining (20) at least one piece of data representative of at least one communications terminal identifier (ITC), configured to implement:
- a step for sending (201) an inquiry request (ReqX) addressed to a plurality of communications devices, by means of a wireless communications interface;
- a step for receiving (202) at least one response (RespX) corresponding to the inquiry request, coming from at least one communications device corresponding to said request, said response comprising a communications terminal identifier;
- means for computing (30) a score of correspondence (SC) between said bankcard identifier (ICBC) and said at least one piece of data representative of a communications terminal identifier (ITC);
- means for transmitting, when the score of correspondence surpasses a predetermined threshold, a piece of information representing a correspondence between said bankcard identifier and said at least one piece of data representative of a communications terminal identifier.

9. Computer program product downloadable from a communications network and/or stored on a computer-readable carrier and executable by a microprocessor, **characterized in that** it comprises program code instructions for executing a method according to claim 1, when it is executed by a processor.
